# EUROPEAN PATENT APPLICATION

(11) **EP 0 727 531 A1**
(43) Date of publication of application: **21.08.1996**
(21) Application number: 96300964.2
(22) Date of filing: 13.02.1996
(51) Int. Cl.: E03C 1/295, F16K 15/14

(54) **Air admittance valve**

(30) Priority: 14.02.1995 GB 9502816
(71) Applicant: GLYNWED PLASTICS LIMITED, Luton, Bedfordshire LU1 1UU (GB)
(72) Inventor: Walker, Nicholas J., Westbury, Wiltshire BA13 3HS (GB); Hirst, James R., Maulden, Bedfordshire MK45 2AD (GB)
(74) Representative: Stonehouse, Sidney William

(57) **Abstract**

The present invention provides an air admittance valve (1), suitable for connection to a pipe (8) to admit air thereto, comprising a hollow valve body (2) adapted to form a substantially tight seal with the pipe (8), and a valve element (3), which is hollow and of substantially conical shape having an open wider end sealingly retained to the valve body (2) and a narrower end which is imperforate except for a slit (19). At least the narrower end is resilient. Under normal and increased pressure conditions in the pipe (8) to which the valve (1) is connected for use the slit (19) is closed and under reduced pressure in the pipe (8) there is a flexure of the narrower end which causes the slit (19) to be opened, allowing air to pass into the pipe (8).

The slit (19) forms a seal with a reduced tendency to stick or leak, in comparison to conventional air admittance valves.

## Description

The present invention relates to an air admittance valve, particularly, though not exclusively, for admitting air to a pipe in a waste water system.

When water is discharged into a waste system, the action of water falling down the waste pipe causes a partial vacuum in the system. If this is not counteracted, water traps in the system will be drawn down the pipe, allowing subsequent entry of foul air. Air admittance valves are therefore often used which, in response to the partial vacuum, admit air into the system thereby alleviating the reduced pressure.

In addition, an increase in pressure, such as, for example, might occur if sewer gas is released into the waste pipe, forces these valves into a closed position, thereby preventing the escape of foul air into the surrounding area.

A variety of designs of air admittance valve are already known, which work on the same basic principle. A flexible, annular valve element, normally held in connection with a valve body forming an air tight seal, is, under the action of a pressure differential caused by the discharge of water into the waste system, constrained to move in an upward or downward direction, depending upon design, admitting air to the system. However, these known valves have several disadvantages.

The basic conventional air admittance valve comprises a mechanically moving seal which has a tendency to stick. In addition, there may be failure due to leakage when dirt ingresses onto the seal or seal area. The valves also comprise a number of components making them complex to manufacture and cumbersome to assemble. It is also difficult to ascertain if the seal is seated properly, once the valve has been assembled.

An object of the present invention is to provide an air admittance valve which overcomes these problems.

According to the present invention there is provided an air admittance valve suitable for connection to a pipe to admit air thereto, in response to a pressure decrease in the pipe, the valve comprising a hollow valve body adapted to form a substantially air tight seal with the pipe, and, supported by the valve body, at least one valve element, which is hollow and of a substantially conical shape having an open wider end which is sealingly retained to the valve body, and a narrower end which is imperforate except for a slit, at least the narrower end being resilient and the arrangement being such that under normal and increased pressure conditions in the pipe to which the valve is connected for use the slit is closed and under conditions of reduced pressure in the pipe there is a flexure of the narrower end which causes the slit to be opened allowing air to pass into the pipe.

Conveniently the valve element is so arranged with respect to the valve body that when the air admittance valve is fitted to a pipe for use the narrower end is directed towards the pipe.

The slit may be at or near the extremity of the narrower end of the valve element. The valve element may be of a truly conical form so that the narrower end is pointed, or it may be of a modified conical form.

For example the narrower end may be of a generally wedge shape, and the slit may be provided along a ridge of an extremity of the wedge-shaped narrower end. The ridge may be adapted to increase the area of contact between opposed surfaces of the extremity at the slit, thereby aiding in the sealing of the slit when closed. The ridge may be rectangular or triangular in cross-section, or of any other suitable cross-section. In a preferred embodiment the- ridge is triangular in cross-section, this reduces the weight of the narrower end of the valve element, and the slit has been found to open more quickly in response to reduced pressure in the pipe.

The wedge-shaped narrower end may be provided with one or more flaps adapted to aid in closing of the valve, reducing any tendency of the slit to gape. The flaps may protrude from one or more sides of the extremity of the wedge-shaped narrower end, increasing the area thereof.

The valve element may have walls which slope at a continuous angle or which may comprise one or more stepped portions.

The open wider end of the valve element may be provided with a sealing surface which may be annular in shape. This surface may be used for retaining the valve element to the valve body. The area of the sealing surface may vary from valve element to valve element, and the surface may incorporate shaping or beading to aid in the retention of the element to the valve body.

Preferably the valve element is made in one piece of a suitable material which affords the desired resilience of the narrower end.

The valve may further comprise a collar adapted to sealingly retain the valve element to the valve body. The valve body may be provided with a groove in which the collar is located.

The valve may further comprise a cover supported on the valve body to protect the valve element. The cover may be of a material which provides insulation for the valve.

There may be a shield, attached to the valve body so as to surround the narrower end of the valve element, thereby affording protection of that end at least during installation. This cover may be so supported on the valve body, or be so formed, for example by having one or more openings, as to allow air to pass by or through it to the valve element.

A filter may be provided on the valve body, so that the air entering the valve element must first pass through the filter, thereby preventing the ingress of dirt, particles and other unwanted matter.

Alternatively, a filter may be provided adapted to locate on the afore-mentioned collar, thereby preventing the ingress of unwanted matter. The filter may be formed integrally with the collar.

A seal may be provided on the valve body adapted to seal the connection between the body and the pipe to which the air admittance valve is connected for use. When such a seal is used, the valve may be readily removed from the pipe when required, for example for replacement or pipe serving. Alternatively, when once fitted for use the air admittance valve may be permanently sealed to the pipe by, for example, cementing the two together.

The valve may further comprise a member adapted to be inserted into the valve element, and whereby should the valve element be subjected to such pressure as to urge it to invert, inversion is prevented by the member.

A number of the valve elements may be supported by the valve body, and the valve as a whole may be made in various sizes to accommodate different pipe dimensions. Different spigot sizes may be provided to accommodate the different pipe dimensions.

A variety of materials may be used for the parts of the valve. The material of the valve element, or at least of the narrower end, must have good memory properties, in order that the narrower end is able to resume repeatedly its original shape, to close the slit, after flexure. An elastomeric material would be suitable for this purpose, and has the added benefit that the valve element may be manufactured readily by moulding. The valve body, cover and/or shield may be made of any suitably rigid or substantially rigid material. A plastic or even thermoplastic material provides the necessary structural properties, in addition to being aesthetically acceptable.

The air admittance valve now provided avoids the need for a bodily movable valve element to admit air to the pipe with which the valve is used. Instead, the or each valve element of the valve relies merely on the shape of the element and the physical, chemical and mechanical properties of the material from which it is made, to achieve the desired movement of air. Any tendency of the valve element to stick, leak or become lodged in an inappropriate position is therefore avoided or reduced. The present valve may be made up of a small number of components, thereby simplifying its manufacture. It may be arranged to be fitted as a single, sealed unit, preventing mishandling or damage during installation.

An embodiment of the present invention will now be described, by way of example only, with reference to the accompanying drawings, in which:
Figure 1 is a section through an air admittance valve according to the invention;
Figure 2 is a perspective view of a cover of the valve, partially cut away;
Figure 3 is a top plan view of a valve element for the valve;
Figure 4 is a side view of the valve element shown in Figure 3;
Figure 5 shows a perspective view of another form of valve element;
Figure 6 shows a section through yet another form of valve element; and
Figure 7 shows a perspective view of a further form of valve element, partially broken away.

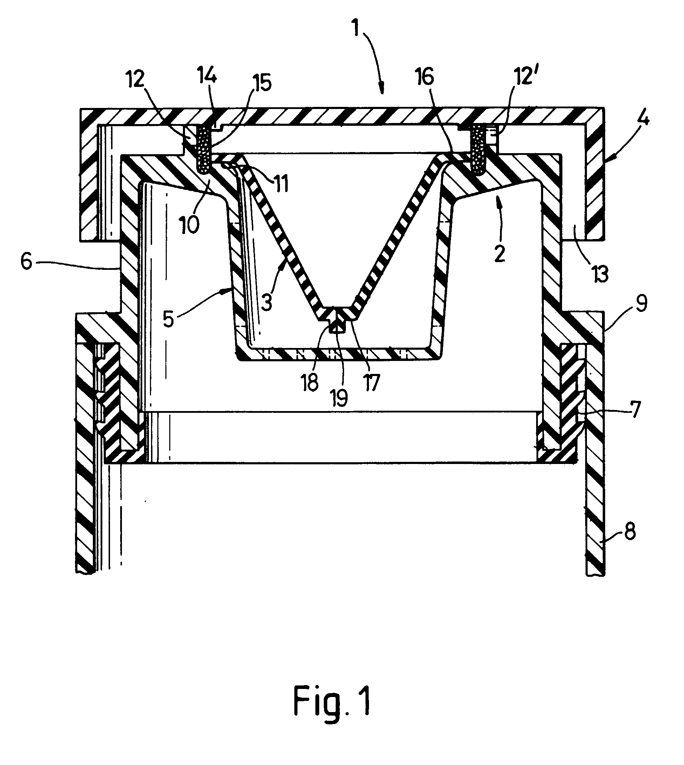

Referring to Figure 1, an air admittance valve 1 is shown, comprising a valve body 2, a valve element 3, a cover 4 and a shield 5.

The valve body 2 is a rigid plastics moulding which comprises a cylindrical tube 6 having an externally circumferentially ribbed sleeve-like seal 7 of elastomeric material attached around its one end. For use of the air admittance valve, the valve body is inserted into an end of a pipe 8, as shown, the seal 7 sealing the connection between the pipe and the valve body. An annular limiting ring 9 is formed integrally on the tube 6, extending radially outwards from the tube and engaging with the end edge of the pipe, thereby limiting the amount by which the valve body can be inserted into the pipe.

The opposite end portion of the valve body 2 is turned radially inwards to provide an annular flange 10. An annular land 11 is formed on the innermost part of the flange 10, and is adapted to receive the valve element 3. The flange 10 is further provided with an annular spacer 12 around the land 11 which is directed away from and concentric with the main part of the valve body 2 and on which the cover 4 is sealingly attached. The spacer 12 has a castellated form, providing openings 12' through it to allow air to pass through it.

The cover 4, which is also a rigid plastics moulding, is of a cap-like form, cooperating in a generally spaced relationship with the valve body to form an air inlet 13 around the tube 6 and over the flange 10 to the openings 12' in the spacer 12. Alternatively, the cap 4 may be adapted such that a rim (not shown) of the cap abuts the limiting ring 9, castellations being formed in the rim to allow air to flow to the openings 12'. The cover is provided with an annular locating rib 14 to lie inside the spacer 12, and an annular filter 15, of metal or plastics mesh material, is located between the locating rib and the spacer 12. Alternatively, the filter may take the form of a disc, located on a shoulder 16 of the valve element 3.

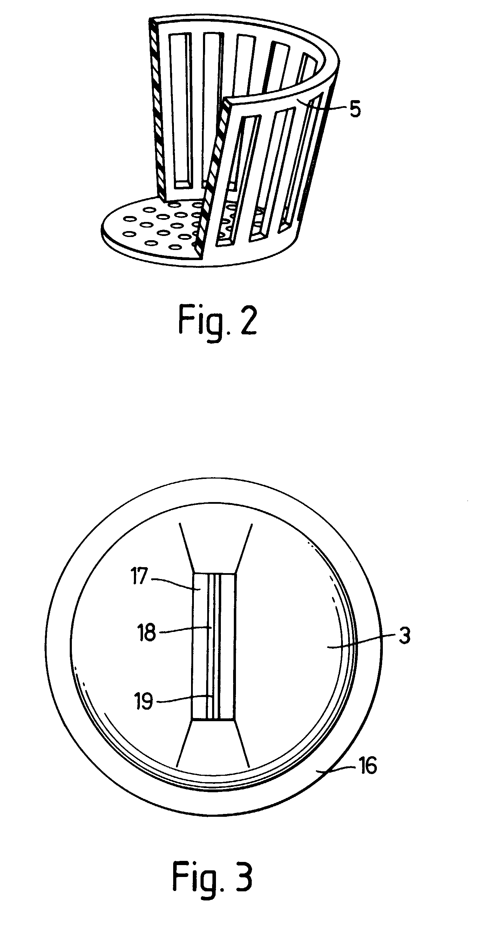

The shield 5, again made as a rigid plastics moulding, is of a cup-like shape and is attached to or may be integrally joined to, the innermost edge of the flange 10 of the valve body. The shield 5 extends in the axially opposite direction from the spacer, towards the pipe, and encapsulates the valve element 3, thereby protecting it from damage. The shield is formed with openings in its end and side surfaces, as shown in Figure 2, thereby allowing air to pass through it into the pipe.

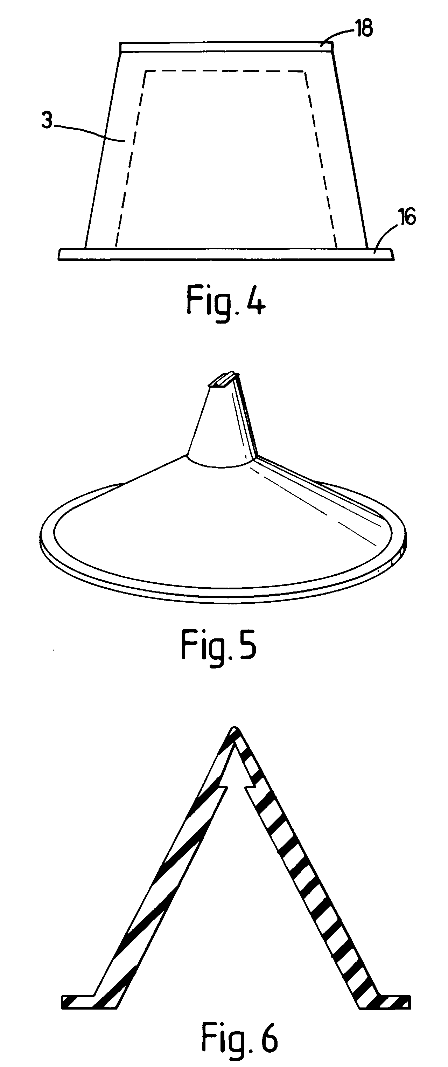

The valve element 3 is a moulding of an elastomeric material and is of a substantially conical shape. Its open larger end is formed with an outwardly directed annular lip 16 which seats on the land 11 of the valve body, sealing the two together. As the valve element tapers towards its narrower end the conical shape is modified to a generally wedge-shaped form having a rectangular end surface 17 (see also Figures 3 and 4), centrally along the length of which is a ridge 18 into which a slit 19 is cut. Under normal conditions, when the pressure on both sides of the valve element is substantially the same, the slit remains closed. Reducing the pressure in the pipe, causing a pressure differential across the valve element, causes the element to deform resiliently in such a way as to open the slit. This admits air via the air inlet 13 into the pipe, equalising the pressure, which then causes the valve element to close. In this way a partial vacuum produced in a waste system by the discharge of water can be counteracted.

Conversely, an increased pressure in the pipe, such as might be caused by the discharge of foul air into it, causes the valve to remain closed.

It will be appreciated that various modifications may be made to the valve element shape. The length and width of the rectangular surface may be altered, the slit may be made longer or shorter, and the angles of the walls may be increased or decreased or made discontinuous (Figure 5). The wall thickness may be varied, having thinner walls towards the narrower end of the valve element (Figure 6). However, the basic action of the element remains the same; an increase in pressure acting on the inner side of the walls of the element causes greater flexure in a direction transverse to the slit than along the slit, thereby opening the slit and allowing air to pass through the air admittance valve.

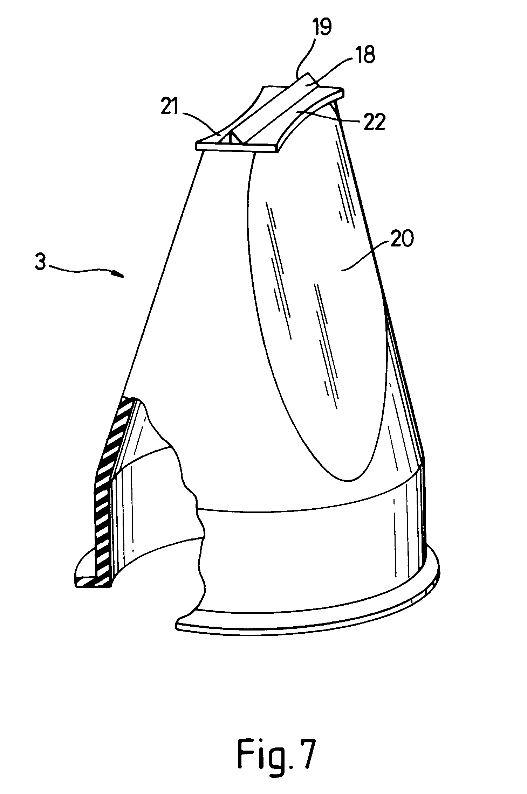

A further embodiment of the valve element 3 is shown in Figure 7. The walls of this element are discontinuous and opposed, convergent flat sides 20 are provided parallel to and on either side of the slit 19. These sides help in opening and closing of the valve element. The ridge 18 is triangular in cross-section and flaps 21 and 22 are provided along each side of the wedge-shaped end of the element. These increase the surface area of the wedge shaped end and help in closing the slit after flexure to admit air to the pipe.

## Claims

1. An air admittance valve suitable for connection to a pipe (8) to admit air thereto in response to a pressure decrease in the pipe (8), characterised in that it comprises a hollow valve body (2) adapted to form a substantially air tight seal with the pipe (8), and, supported by the valve body (2), at least one valve element (3), which is hollow and of a substantially conical shape having an open wider end sealingly retained to the valve body (2) and a narrower end which is imperforate except for a slit (19), at least the narrower end being resilient and the arrangement being such that under normal and increased pressure conditions in the pipe (8) to which the valve (1) is connected for use the slit (19) is closed and under conditions of reduced pressure in the pipe (8) there is a flexure of the narrower end which causes the slit (19) to be opened allowing air to pass into the pipe (8).

2. An air admittance valve according to claim 1, characterised in that the valve element (3) is so arranged with respect to the valve body (2) that the narrower end is directed towards the pipe (8) to which the valve is fitted for use.

3. An air admittance valve according to claim 1 or claim 2, characterised in that the slit (19) is at or near the extremity of the narrower end of the valve element (3).

4. An air admittance valve according to any preceding claim, characterised in that the valve element (3) is of a truly conical form so that the narrower end is pointed.

5. An air admittance valve according to any of claims 1 to 3, characterised in that the valve element (3) is of a modified conical form.

6. An air admittance valve according to claim 5, characterised in that the narrower end of the modified conical form of the valve element (3) is of a generally wedge shape,and the slit (19) is provided along a ridge of the wedge-shaped narrower end whereby the area of contact between opposed surfaces of the extremity of the slit is increased.

7. An air admittance valve according to claim 6 characterised in that the wedge-shaped narrower end is provided with one or more flaps (21, 22) extending therealong adapted to aid closure of the slit (19).

8. An air admittance valve according to any preceding claim, characterised in that the valve element (3) has walls which slope at a continuous angle or which comprise one or more stepped portions.

9. An air admittance valve according to any preceding claim characterised in that the valve element (3) has walls including opposed, convergent flat sides (20) parallel to and on either side of the slit (19).

10. An air admittance valve according to any preceding claim, characterised in that the valve element (3) is provided with a sealing surface (16) which is adapted to retain the valve element to the valve body (2).

11. An air admittance valve according to any preceding claim, characterised in that the valve element (3) is made in one piece of a material which affords resilience and memory properties of the narrower end enabling the narrower end to resume its original shape, to close the slit (19), after flexure.

12. An air admittance valve according to any preceding claim, characterised in that it includes a collar adapted sealingly to retain the valve element (3) to the valve body (2).

13. An air admittance valve according to any preceding claim, characterised in that a cover (4) supported on the valve body (2) to protect the valve element (3).

14. An air admittance valve according to any preceding claim, characterised in that it includes a shield (5) attached to the valve body (2) so as to surround the narrower end of the valve element (3) , thereby affording protection of that end.

15. An air admittance valve according to claim 13 or claim 14, characterised in that the cover (4) or shield (5) is adapted to allow air to pass by or through it to the valve element (3).

16. An air admittance valve according to any preceding claim, characterised in that it includes a filter adapted so that air entering the valve element (3) must first pass through the filter, thereby preventing the ingress of unwanted matter.

17. An air admittance valve according to any preceding claim, characterised in that the valve body (2) has a seal (7) whereby its connection to the pipe is able to be sealed.

18. An air admittance valve according to any preceding claim, characterised in that the valve body (2) is made of a rigid or substantially rigid material, for example a plastic or thermoplastic material, and the valve element (3) is a moulding of an elastomeric material.

19. An air admittance valve according to any preceding claim, characterised in that a member is inserted in the valve element (3) whereby inversion of the element is prevented under pressure exerted on the valve element in use.
